# EUROPEAN PATENT APPLICATION

(11) **EP 1 228 910 A2**
(43) Date of publication of application: **07.08.2002**
(21) Application number: 02002543.3
(22) Date of filing: 04.02.2002
(51) Int. Cl.: B60H 1/32

(54) **Vehicular air conditioner**

(30) Priority: 05.02.2001 JP 2001028749
(71) Applicant: Kabushiki Kaisha Toyota Jidoshokki, Kariya-shi, Aichi-ken (JP)
(72) Inventor: Murase, Masakazu, Kariya-shi, Aichi-ken (JP); Imai, Takayuki, Kariya-shi, Aichi-ken (JP); Yokomachi, Naoya, Kariya-shi, Aichi-ken (JP)
(74) Representative: Leson, Thomas Johannes Alois, Dipl.-Ing.

(57) **Abstract**

A first external refrigerant circuit (41) includes a condenser (43), a pressure reducing device (45) and an evaporator (46). A compressor (C) is directly connected to a drive source (E) of the vehicle to permit power transmission and compresses a refrigerant by being driven by the drive source at all times. The compressor (C) and the first external refrigerant circuit (41) form a refrigerant circulation circuit. A second external refrigerant circuit (62) connects a discharge chamber (22) and a suction chamber (21) of the compressor at the outside of the compressor (C) and permits the circulation of a refrigerant that is not involved in air conditioning. Control devices (42, 51, 63, 67, 71) selectively open or close the first external refrigerant circuit (41) and the second external refrigerant circuit (62), respectively.

## Description

The present invention relates to a vehicular air conditioner provided with a compressor that is directly connected to a drive source of a vehicle so that power transmission is possible, and the compressor executes compression of refrigerant driven at all times by the drive source of the vehicle.

Swash plate type compressors used in, for example, a vehicular air conditioner include a clutchless type having no clutch mechanism on a power transmission path between the compressor and the engine of the vehicle. For the clutchless compressor, a variable displacement type has been generally used. In the compressor, the discharge displacement can be changed by changing the pressure in a crank chamber, and the discharge displacement is minimized when cooling is not needed.

In the clutchless compressor, the minimum discharge displacement is set to near zero when no cooling is needed, in order to reduce the load on the engine. Therefore, at the minimum discharge displacement of the compressor, the refrigerant flow rate in a refrigerant circulation circuit becomes small. As a result, the amount of lubricating oil that returns to the compressor together with the refrigerant becomes small.

Therefore, in the prior art, when the discharge displacement of the compressor is minimized, the circulation of the refrigerant that passes through an external refrigerant circuit is stopped and, at the same time, an internal refrigerant circulation circuit that passes through a discharge chamber, a crank chamber, a suction chamber and a compression chamber (and to the discharge chamber) is formed. Then, the state of lubrication of each sliding portion in the compressor is favorably maintained by lubricating oil circulating with the refrigerant in this internal refrigerant circulation circuit.

However, in the state of minimum discharge displacement (the state of the internal refrigerant circulation) for the clutchless compressor, when the thermal environment of the compressor becomes severe as the rotational speed of the engine becomes high, or when the outside air temperature becomes high, the temperature of the refrigerant and the lubricating oil that circulate within the compressor is excessively increased inside the compressor and components of the compressor are exposed to a thermally severe environment.

Particularly, when carbon dioxide is used as the refrigerant, the refrigerant pressure becomes significantly higher than when chlorofluorocarbon refrigerant is used. Thus, in the state of the minimum discharge displacement, the temperature inside the compressor increases more significantly than when the chlorofluorocarbon refrigerant is used.

The above-mentioned problems can be solved by continuously supplying the refrigerant to the external refrigerant circuit, even when cooling is unnecessary, to prevent heat increase in the compressor. However, this results in unnecessary air conditioning.

The object of the present invention is to provide an air conditioner that can improve durability of a clutchless compressor without executing unnecessary air conditioning.

To attain the above-described object:, according to the present invention, a vehicular air conditioner is provided. The air conditioner includes a first external refrigerant circuit, a compressor, a second external refrigerant circuit and control means. The first external refrigerant circuit includes a condenser, a pressure reducing device, and an evaporator. The compressor is directly connected to a drive source of the vehicle to permit power transmission. The compressor compresses a refrigerant by being at all times driven by the drive source. The compressor and the first external refrigerant circuit form a refrigerant circulation circuit. The second external refrigerant circuit connects a discharge chamber to a suction chamber of the compressor at the outside of the compressor and permits the circulation of a refrigerant that is not involved in air conditioning. The control means selectively open or close the first external refrigerant circuit and the second external refrigerant circuit, respectively.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a circuit diagram of a vehicular air conditioner of a first embodiment;
Fig. 2 is a flowchart explaining the processing of a controller;
Fig. 3 is a cross-sectional view of a bypass control valve showing a second embodiment;
Fig. 4 is a circuit diagram of a vehicular air conditioner of a third embodiment;
Fig. 5 is a circuit diagram of a vehicular air conditioner of a fourth embodiment; and
Figs. 6(a), 6(b), and 6(c) are circuit diagrams of a vehicular air conditioner of a fifth embodiment.

The first to fifth embodiments in which the present invention has been embodied will be described below. It should be noted that in the second to fifth embodiments, only the difference from the first embodiment is described and that the same numeral is denoted to the same member or the corresponding member to omit the explanation.

### First Embodiment

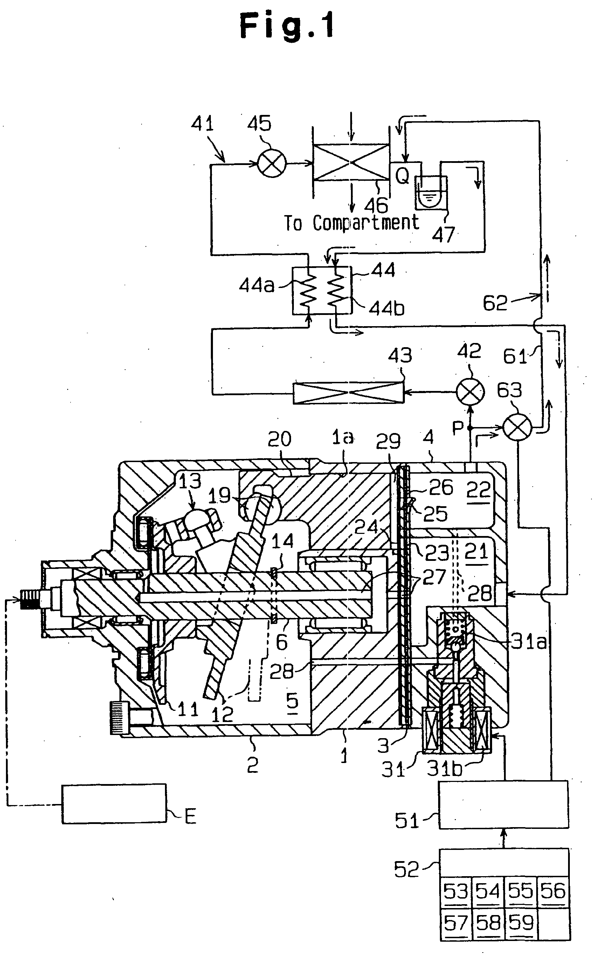

As shown in Fig. 1, a variable displacement type swash plate compressor C (hereinafter referred simply to as a compressor C) includes a cylinder block 1, a front housing 2 fixed to the front end thereof, and a rear housing 4 fixed to the rear end of the cylinder block 1 through a valve plate 3.

A crank chamber 5 is defined in a region surrounded by the cylinder block 1 and the front housing 2. A drive shaft 6 is rotatably provided in the crank chamber 5. The drive shaft 6 is directly connected to an output shaft (not shown) of an engine E, which is a drive source of a vehicle, not by way of a clutch mechanism such as an electromagnetic clutch. Thus, the drive shaft 6 is always driven to be rotated by the engine E in operation of the engine E.

As described above, since the compressor C does not include an expensive and heavy electromagnetic clutch on a power transmission path between the engine E and the compressor C, it is inexpensively provided. Additionally, since the light weight of the compressor C can be achieved and the shock due to the on-off of the electromagnetic clutch does not occur, deterioration in drivability can be prevented.

In the crank chamber 5, a lug plate 11 is secured to the drive shaft 6 so that it can rotate integrally therewith. A cam plate, or a swash plate 12, is accommodated in the crank chamber 5. The swash plate 12 is slidably and tiltably supported by the drive shaft 6. A hinge mechanism 13 is placed between the lug plate 11 and the swash plate 12. Thus, the swash plate 12 is rotatable integrally with the lug plate 11 and the drive shaft 6 by coupling with the lug plate 11 through the hinge mechanism 13 and by support of the drive shaft 6, and is tiltable with respect to the drive shaft 6 while slide moving along the axial direction of the drive shaft 6.

A plurality of cylinder bores 1a only one shown in Fig. 1) are formed to surround the drive shaft 6 in the cylinder block 1. A single headed piston 20 is reciprocally accommodated in each cylinder bore 1a. The front and rear openings of the cylinder bore 1a are respectively closed by the valve plate 3 and the piston 20. In each cylinder bore 1a is defined a compression chamber 29 whose volume is changed in accordance with the reciprocation of the piston 20. Each piston 20 is coupled to the peripheral portion of the swash plate 12 through shoes 19. Therefore, the rotation of the swash plate 12 caused by the rotation of the drive shaft 6 is converted to linear reciprocation of the piston 20 through the shoes 19.

A suction chamber 21 and a discharge chamber 22 are defined between the valve plate 3 and the rear housing 4. A refrigerant gas in the suction chamber 21 is sucked into the compression chamber 29 through a suction port 23 and a suction valve 24 formed in the valve plate 3 by movement of each piston 20 from the top dead center position toward the bottom dead center position. The refrigerant gas sucked into the compression chamber 29 is compressed to a predetermined pressure by movement of the piston 20 from the bottom dead center position toward the top dead center position and is discharged to the discharge chamber 22 through a discharge port 25 and a discharge valve 26 formed in the valve plate 3.

A crank pressure control mechanism for controlling pressure in the crank chamber 5 (crank pressure) relating to the control of the inclination angle of the swash plate 12, is comprised of a bleed passage 27, a supply passage 28 and a control valve 31 formed in the housing of the compressor. The bleed passage 27 connects the crank chamber 5 to the suction chamber 21. The supply passage 28 connects the discharge chamber 22 to the crank chamber 5, and the control valve 31 is provided therebetween.

The control valve 31 is comprised of an electromagnetic valve and includes a valve body 31a for adjusting the degree of opening of the supply passage 28 and an electromagnetic actuator 31b, which causes the valve body 31a to operate by controlling electric current supplied from the outside. The electromagnetic actuator 31b is controlled by a controller 51 in accordance with detected information (cooling load or the like) from an information detector 52. The electromagnetic actuator 31b causes the valve body 31a to operate in accordance with the amount of current to adjust the degree of opening of the supply passage 28.

Accordingly, a balance between the amount of high pressure discharge gas introduced to the crank chamber 5 through the supply passage 28 and the amount of gas relieved from the crank chamber 5 through the bleed passage 27 is controlled and a crank pressure is determined. According to the crank pressure, the difference between the crank pressure and the internal pressure in the compression chamber 29 through the piston 20 is changed so that an inclination angle of the swash plate 12 (an angle formed by the swash plate and an imaginary plane perpendicular to the drive shaft 6) is changed. As a result, a stroke of the piston 20, that is a discharge displacement, is adjusted.

When the degree of opening of the control valve 31 is decreased, the crank pressure decreases and the difference between the crank pressure and the internal pressure in the compression chamber 29 also decreases so that the inclination angle of the swash plate 12 increases. As a result, the discharge displacement of the compressor C increases. Fig. 1 shows a state where the swash plate 12 is abutted against the lug plate 11 so that it is restricted to the position where the inclination angle becomes the maximum. At that time, the discharge displacement of the compressor C becomes the maximum.

On the contrary, when the degree of opening of the control valve 31 is increased, the crank pressure increases and the difference between the crank pressure and the internal pressure in the compression chamber 29 also increases so that the inclination angle of the swash plate 12 decreases. As a result, the discharge displacement of the compressor C decreases. An imaginary line in Fig. 1 shows a state where the swash plate 12 is abutted against the minimum inclination angle restricting portion 14 so that it is restricted to the position where the inclination angle is the minimum. At that time, the discharge displacement of the compressor C becomes the minimum. The state of this minimum discharge displacement is provided by full opening of the control valve 31. It should be noted that the minimum inclination angle of the swash plate 12 is set to near zero (for example, 2 to 5 degrees). Therefore, in the state of the minimum discharge displacement, the load torque of the compressor C is small and the load of the compressor C on the engine E is small.

As shown in Fig. 1, the information detector 52 includes an air conditioning switch 53, which is an on-off switch of an air conditioner, a temperature setting device 54 for setting temperature of a vehicle compartment, a vehicle compartment temperature sensor 55 for detecting temperature of the vehicle compartment, an outside-air temperature sensor 56 for detecting the outside-air temperature, a housing temperature sensor 57 for detecting temperature of housings 1, 2 and 4 of the compressor C, a fluid temperature sensor 58 for detecting temperature of fluid (refrigerant and lubricating oil) flowing within the compressor, and a rotational speed sensor 59 for detecting a rotational speed of an output shaft of the engine E, which has a unique relation to the rotational speed of the drive shaft 6.

In the present embodiment, the outside-air temperature sensor 56, the housing temperature sensor 57, the fluid temperature sensor 58, and the rotational speed sensor 59 of the information detector 52 constitute a heat-generation state detecting sensor.

For example, when the refrigerant temperature within the compressor increases, the housing temperature also increases. On the other hand, when the refrigerant temperature within the compressor decreases, the housing temperature also decreases. That is, the housing temperature is a physical quantity having a correlation with the refrigerant temperature, and both of them are physical quantities representing the heat-generation state of the compressor C. Thus, the housing temperature sensor 57 can be considered as a fluid temperature sensor as well. Further, when the outside-air temperature or the rotational speed of the engine E (drive shaft) increases, the refrigerant temperature also increases. On the contrary, when the outside-air temperature or the rotational speed of the engine E (drive shaft) decreases, the refrigerant temperature also decreases. That is, the outside-air temperature and the rotational speed of engine E are physical quantities, which influence on the refrigerant temperature, that is, the heat-generation state of the compressor C.

As shown in Fig. 1, a refrigerant circulation circuit (refrigeration cycle) of a vehicular air conditioner includes the compressor C and a first external refrigerant circuit 41, which connects the discharge chamber 22 to the suction chamber 21 of the compressor C. The first external refrigerant circuit 41 is provided with, in the order from the high pressure side (discharge chamber 22 side), a shut-off valve 42, an outdoor heat exchanger 43 that functions as a condenser, a high-pressure side heat exchanger 44a of an internal heat exchanging device 44, an expansion valve 45 that functions as a pressure reducing device, an indoor heat exchanger 46 that functions as an evaporator, an accumulator (gas/liquid separator) 47, and a low-pressure side heat exchanger 44b of the internal heat exchanging device 44. Carbon dioxide is used as a refrigerant.

The shut-off valve 42 forms a control means of the external refrigerant circuit, and when pressure on the side of the discharge chamber 22 becomes lower than a predetermined value, the shut-off valve 42 shuts off the refrigerant passage so that the circulation of the refrigerant that passes through the first external refrigerant circuit 41, is stopped. The shut-off valve 42 may be a differential pressure type that mechanically detects the difference in pressure of the front and the back of the shut-off valve 42, or an electromagnetic valve type whose electric power supply is controlled by a controller 51 in accordance with a detected value by a discharge pressure sensor (not shown). Further, the shut-off valve 42 may be a type that is mechanically linked to the minimum inclination angle of the swash plate 12.

The accumulator 47 separates the refrigerant into a gas phase and a liquid phase and at the same time sends the separated gas refrigerant toward the suction chamber 21 side of the compressor C.

The internal heat exchanging device 44 executes heat exchange between the high-pressure refrigerant flowing in the high-pressure side heat exchanger 44a and the low-pressure refrigerant flowing in the low-pressure side heat exchanger 44b. In this way, by executing heat exchange between the high-pressure refrigerant and the low-pressure refrigerant, a specific enthalpy at the inlet of the indoor heat exchanger 46 can be reduced as compared with the case where the heat exchange is not executed. Thus, the cooling performance and efficiency of the air conditioner are improved.

Further, in the first external refrigerant circuit 41, point P between the discharge chamber 22 of the compressor C and the shut-off valve 42 communicates with point Q between the indoor heat exchanger 46 and the accumulator 47 through a bypass passage (pipe) 61. The bypass passage 61 bypasses the shut-off valve 42, the outdoor heat exchanger 43, the high-pressure side heat exchanger 44a, the expansion valve 45 and the indoor heat exchanger 46.

A second external refrigerant circuit 62 includes a passage between the contact point P on the high-pressure side of the bypass passage 61 and the discharge chamber 22, the bypass passage 61 between the two contact points P and Q, and a passage between the contact point Q on the low-pressure side of the bypass passage 61 and the suction chamber 21. Since the accumulator 47 and the low-pressure side heat exchanger 44b of the internal heat exchanging device 44 are disposed on the passage between the contact point Q and the suction chamber 21, they are also included in the second external refrigerant circuit 62. The second external refrigerant circuit 62 uses a part of the first external refrigerant circuit 41 in common. The low-pressure side heat exchanger 44b also serves as a heat exchanger for cooling a refrigerant.

A bypass control valve 63 as an electromagnetic valve is provided on the bypass passage 61. The bypass control valve 63 constitutes external refrigerant circuit control means and can open or close (switches) the bypass passage 61 (second external refrigerant circuit 62) by the electric power supply control from the controller 51. The controller 51 usually shuts off the bypass passage 61 through the bypass control valve 63, and opens the bypass passage 61 only in a special case.

Next, operation of the air conditioner in the present embodiment will be described.

When the controller 51 detects that cooling is not required through the information detector 52, which, for instance, detects that the air conditioning switch 53 is off, it commands control valve 31 to fully open the supply passage 28. Therefore, the discharge displacement of the compressor C is minimized. In this state of the minimum discharge displacement, the pressure of the shut-off valve 42 in the discharge chamber 22 side becomes lower than a predetermined value, so that the shut-off valve 42 is closed. Further, the bypass passage 61 is in the shut-off state by the bypass control valve 63. Accordingly, the circulation of the refrigerant passed through the first external refrigerant circuit 41 and the second external refrigerant circuit 62, that is, the external circulation of the refrigerant is stopped.

Since the minimum inclination angle of the swash plate 12 is not zero, even if the discharge displacement of the compressor C is minimized, the suction of the refrigerant gas from the suction chamber 21 to the compression chamber 29, the compression of the refrigerant gas and the discharge thereof from the compression chamber 29 to the discharge chamber 22 are continued. Therefore, in the inside of the compressor C, a circulation circuit consisting of the discharge chamber 22, the supply passage 28, the crank chamber 5, the bleed passage 27, the suction chamber 21, the compression chamber 29 and the discharge chamber 22 is formed and lubricating oil circulates in the internal refrigerant circulation circuit together with the refrigerant. This prevents the lubricating oil from being discharged outside the compressor C and the lubrication condition of each slide portion (for example, between the swash plate 12 and the shoe 19) is favorably maintained.

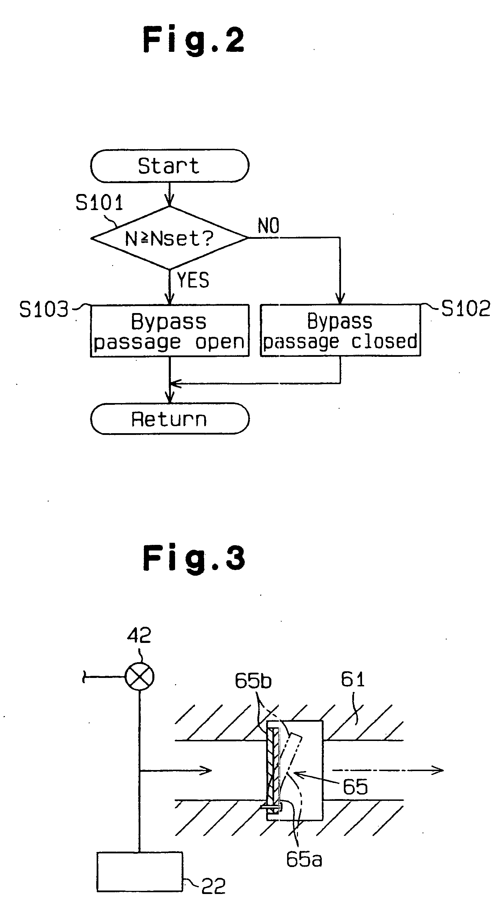

Then, the controller 51 starts an operation shown in the flowchart of Fig. 2 in the state of the minimum discharge displacement (the state of the internal refrigerant circulation) of the compressor C.

That is, in step (hereinafter referred simply to as S) 101, it is determined whether or not a heat generation state N of the compressor C is a deterioration state (N>Nset) based on the detected information from the heat generation state detecting sensors 56 to 59. Here, it should be noted that a state where the heat generation state of the compressor C is in a deterioration state means a state in which at least one of the following states is satisfied, where the outside air temperature is a predetermined reference outside air temperature or higher, the housing temperature is a predetermined reference housing temperature or higher, the refrigerant temperature is a predetermined reference refrigerant temperature or higher, and the rotational speed of the engine E is a predetermined reference rotational speed or higher, and at the same time this state is maintained for a predetermined time or longer.

If the determination of the S101 is NO, the shut-off state of the bypass passage 61 by the bypass control valve 63 is maintained in the procedure of S102. That is, an internal refrigerant circulation state in the compressor C is continued.

On the contrary, if the determination of the S101 is YES, the bypass control valve 63 is directed to open the bypass passage 61 in the procedure of S103, and a protection control is executed. Thus, the internal refrigerant circulation in the compressor C is stopped and at the same time, as shown by the arrow of a chain line in Fig. 1, external circulation of refrigerant that passes through the second external refrigerant circuit 62 is started. Then, the discharge of the high-temperature refrigerant and the lubricating oil held inside the compressor C to the outside are executed, and cooling of the circulating refrigerant and the lubricating oil is also executed due to the heat radiation from the pipe constituting the second external refrigerant circuit 62 and the internal heat exchanging device 44 (low-pressure side heat exchanger 44b). Accordingly, the temperature inside the compressor C is decreased and the components of the compressor C can be released from thermally severe conditions.

The present embodiment with the above-described constitution has the following effects.
(1) When the heat generation state of the compressor C in the minimum discharge displacement state (internal refrigerant circulation state) deteriorates, the external refrigerant circulation via the second external refrigerant circuit 62 is executed by opening the circuit 62. Since the second external refrigerant circuit 62 does not pass through the indoor heat exchanger 46, even if the refrigerant flows in the circuit 62, the circuit 62 does not influence the air conditioning. Therefore, the components of the compressor C can be prevented from falling into thermally severe conditions without executing unnecessary cooling. As a result, the durability of the compressor C can be improved. Further, the use of carbon dioxide that exhibits significantly higher pressure than chlorofluorocarbon refrigerant as the refrigerant can be easily realized.
(2) The second external refrigerant circuit 62 partially shares the refrigerant passage with the first external refrigerant circuit 41. This can simplify the refrigerant circulation circuit formation.
(3) The low-pressure side of the bypass passage 61 is connected to the first external refrigerant circuit 41 at the point Q between the indoor heat exchanger 46 and the accumulator 47, and the accumulator 47 also constitutes the second external refrigerant circuit 62. The accumulator 47 retains a large amount of lubricating oil therein during the circulation of the refrigerant that passes through the first external refrigerant circuit 41 due to the function and the structure thereof, and during the protection control, the amount of lubricating oil contained in the refrigerant which is returned from the accumulator 47 to the compressor C can be increased. This results in an improvement of lubricating properties of the compressor C.
(4) The low-pressure side of the bypass passage 61 is connected between the indoor heat exchanger 46 and the low-pressure side heat exchanger 44b of the internal heat exchanging device 44 in the first external refrigerant circuit 41, and the low-pressure side heat exchanger 44b also constitutes the second external refrigerant circuit 62. Therefore, by a favorable heat radiation by the low-pressure side heat exchanger 44b, the cooling effects of the refrigerant and the lubricating oil during the protection control are enhanced. This leads to a further improvement of durability of the compressor C.
(5) The bypass control valve 63 consists of an electromagnetic valve and opens or closes (switches) the bypass passage 61 by electric power supply control from outside by the controller 51. Thus, as compared with a case where an internal control valve (refer to the second embodiment) is used as, for example, the bypass control valve 63, there is no such possibility that the bypass passage 61 (second external refrigerant circuit 62) be opened while the shut-off valve 42 opens the first external refrigerant circuit 41. Thus, the reliability of operation of the bypass control valve 63 can be enhanced.
(6) In a state where the first external refrigerant circuit 41 and the second external refrigerant circuit 62 are shut off, the refrigerant and the lubricating oil are circulating only inside the compressor C. When the refrigerant is circulating inside the compressor C, only in a case where a heat-generation state of the compressor C deteriorates, the bypass control valve 63 opens the second external refrigerant circuit 62. That is, when the heat-generation state of the compressor C does not deteriorate, a refrigerant circulation state inside the compressor C is maintained so that sufficient amount of lubricating oil can circulate internally. Thus, the lubrication environment of each slide portion becomes favorable.
(7) The controller 51 refers to the outside air temperature and the rotational speed of the engine E in determination of the heat generation state of the compressor C. Thus, by grasping the outside air temperature and the rotational speed of engine E, which are factors that influence the heat generation state of the compressor C, deterioration of the heat generation state can be predicted so that a protection control can be executed in advance. This results in a further improvement in durability of the compressor C.
(8) The controller 51 refers to the housing temperature and the refrigerant temperature in determination of the heat generation state of the compressor C. Thus, by directly grasping the heat generation state of the compressor C, the protection control can be accurately taken.

### Second Embodiment

The present embodiment is different from the above-described first embodiment in that the bypass control valve 63 is replaced by a bypass control valve 65, which is an internal control type as shown in Fig. 3. The bypass control valve 65 consists of a sensing member 65a and a valve body 65b. The sensing member 65a is disposed on the bypass passage 61 and is made of a bimetal that deforms in accordance with the temperature of the refrigerant and lubricating oil, which flow into the passage 61. The valve body 65b is integrally provided on the sensing member 65a so that it can open or close the bypass passage 61 in accordance with the deformation of the sensing member 65a.

Further, when the temperature of the refrigerant and the lubricating oil is a predetermined value or lower, the bypass control valve 65 shuts off the bypass passage 61, and when the temperature of the refrigerant and the lubricating oil exceeds the predetermined value, the bypass control valve 65 opens the bypass passage 61. Under conditions where the refrigerant and the lubricating oil are externally circulating via the first external refrigerant circuit 41, it hardly happens that the temperature of the refrigerant and the lubricating oil, which flow into the bypass passage 61, exceeds a predetermined value, and the bypass passage 61 is maintained at a shut-off state.

However, in a state where the refrigerant is circulating inside the compressor C, heat may be contained within the compressor C and the temperature of the refrigerant and the lubricating oil that flow into the bypass passage 61 may exceed a predetermined value as described in the prior art. When this temperature exceeds a predetermined value, the bypass control valve 65 opens the bypass passage 61 to execute the external refrigerant circulation via the second external refrigerant circuit 62 as in the protection control of the above-described first embodiment. As a result, the components of the compressor C can be released from thermally severe conditions.

The present embodiment has the same effects as the effects (1) to (4) and (6) of the first embodiment. Further, since the bypass control valve 65 is internally controlled and opens or closes the bypass passage 61, an electrical constitution of the air conditioner can be simplified and the computation load on the controller 51 can be reduced.

### Third Embodiment

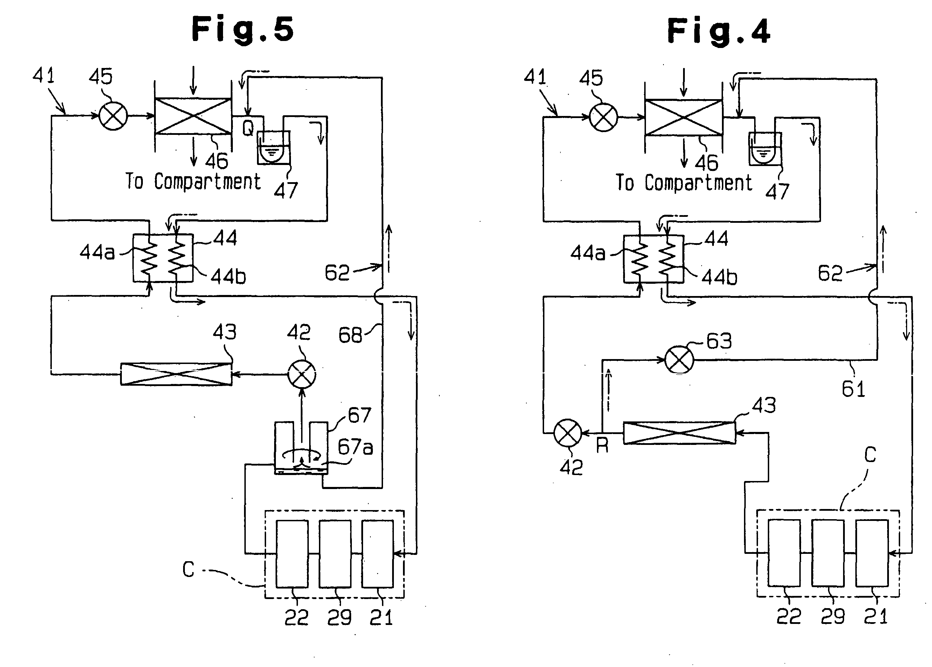

As shown in Fig. 4, in the present embodiment, the shut-off valve 42 is disposed between the heat exchanger 43 and the high-pressure side heat exchanger 44a of the internal heat exchanging device 44 in the first external refrigerant circuit 41. Further, the high-pressure side of the bypass passage 61 is connected to point R between the outdoor heat exchanger 43 and the shut-off valve 42 in the external refrigerant circuit 41. Thus, the second external refrigerant circuit 62 also includes the outdoor heat exchanger 43 on its refrigerant passage.

The present embodiment has the same effects as in the above-described first embodiment. Further, by excellent heat radiation by the outdoor heat exchanger 43, the cooling effects of the refrigerant and the lubricating oil during a protection control are enhanced. This results in a further improvement of the durability of the compressor C.

### Fourth Embodiment

As shown in Fig. 5, in the present embodiment, an oil separator 67 is positioned between the discharge chamber 22 of the compressor C and the shut-off valve 42 in the first external refrigerant circuit 41. The oil separator 67 separates misty lubricating oil contained in the refrigerant gas discharged from the discharge chamber 22, from the refrigerant gas. An oil storage chamber 67a of the oil separator 67 is connected to the first external refrigerant circuit 41 at the point Q between the indoor heat exchanger 46 and the accumulator 47 through an oil return passage 68.

Therefore, when the refrigerant is circulating via the first external refrigerant circuit 41, the lubricating oil separated by the oil separator 67 is returned, while being cooled, to the suction chamber 21 within the compressor C through the oil return passage 68, the contact point Q, the accumulator 47 and the low-pressure side heat exchanger 44b. Thus, by providing the oil separator 67, the flowing of lubricating oil into the heat exchangers 43, 44a and 46 can be prevented and a deterioration of the efficiency in heat exchange for the heat exchangers 43, 44a and 46 due to adhesion of the lubricating oil to the inside thereof can be prevented. Further, in the compressor C, the lubricating oil discharged outside is rapidly returned inside without being interfered by the heat exchangers 43, 44a and 46. As a result, the lubrication state of each slide portion can be favorably maintained.

When the discharge displacement of the compressor C is minimized and the refrigerant circulation via the first external refrigerant circuit 41 is stopped by the shut-off valve 42, the refrigerant and the lubricating oil that flowed into the oil separator 67 from the discharge chamber 22 of the compressor C are returned into the compressor C through the oil return passage 68 and a passage on the downstream (suction chamber 21) side from the contact point Q of the oil return passage 68 in the first external refrigerant circuit 41. That is, in the present embodiment, the oil return passage 68 constitutes the second external refrigerant circuit 62 while also serving as a bypass passage.

Further, the oil return passage (bypass passage) 68 is not provided with the bypass control valve 63 provided in the first embodiment, and the passage 68 is always kept open. Thus, when the discharge displacement of the compressor C is minimized, refrigerant circulation via the second external refrigerant circulation 62 is executed at all times, but inner refrigerant circulation within the compressor C is not executed.

In a state where the first external refrigerant circuit 41 is open by the shut-off valve 42, most of the refrigerant separated from the oil at the oil separator 67 flow out toward the shut-off valve 42 side, the path easy to flow, and it can be considered that only the lubricating oil flows out of the oil separator 67 to the oil return passage 68 although a little amount of refrigerant may leak therein. Thus, the state where the refrigerant is not circulating in the oil return passage is substantially the same as the state where the second external refrigerant circuit 62 is shut-off. In that sense, the shut-off valve 42 also indirectly opens or closes the second external refrigerant circuit 62. Therefore, in the present embodiment, a combination of the shut-off valve 42 with the oil separator 67 provided on the upstream side of the shut-off valve 42 in the first external refrigerant circuit 41 constitutes control means for the external refrigerant circuit.

The present embodiment has the same effects as the effects (2) to (4) of the above-described first embodiment and additionally has the following effects.
(1) In the state of the minimum discharge displacement of the compressor C, the external refrigerant circulation via the second external refrigerant circuit 62 is executed at all times, and the circulating refrigerant and lubricating oil are cooled by the heat radiation of the pipe constituting the second external refrigerant circuit 62 and the internal heat exchanging device 44 (low-pressure side heat exchanger 44b). Thus, the compressor C does not fall into thermally severe conditions. Further, since the second external refrigerant circuit 62 does not pass through the indoor heat exchanger 46, even if the refrigerant flows in the circuit 62, it does not affect air conditioning. Therefore, the components of the compressor C can be prevented from falling into thermally severe conditions without executing unnecessary cooling. As a result, the durability of the compressor C can be improved. Further, the use of carbon dioxide that exhibits significantly higher pressure as a refrigerant than chlorofluorocarbon refrigerant can be easily realized.
(2) As a bypass passage, the oil return passage 68 from the oil separator 67 is utilized, and as compared with a case where an exclusive bypass passage is provided, the formation of the refrigerant circuit can be simplified.
(3) When the first external refrigerant circuit 41 is opened by the shut-off valve, substantial shut-off of the second external refrigerant circuit 62, that is, the stop of the refrigerant circulation is executed by the oil separator 67. On the contrary, when the first external refrigerant circuit 41 is shut off by the shut-off valve 42, the second external refrigerant circuit 62 is opened, that is, the refrigerant circulation is started in the same manner by the oil separator 67. Therefore, the bypass control valve can be omitted, and the formation of the refrigerant circulation circuit can be further simplified.

### Fifth Embodiment

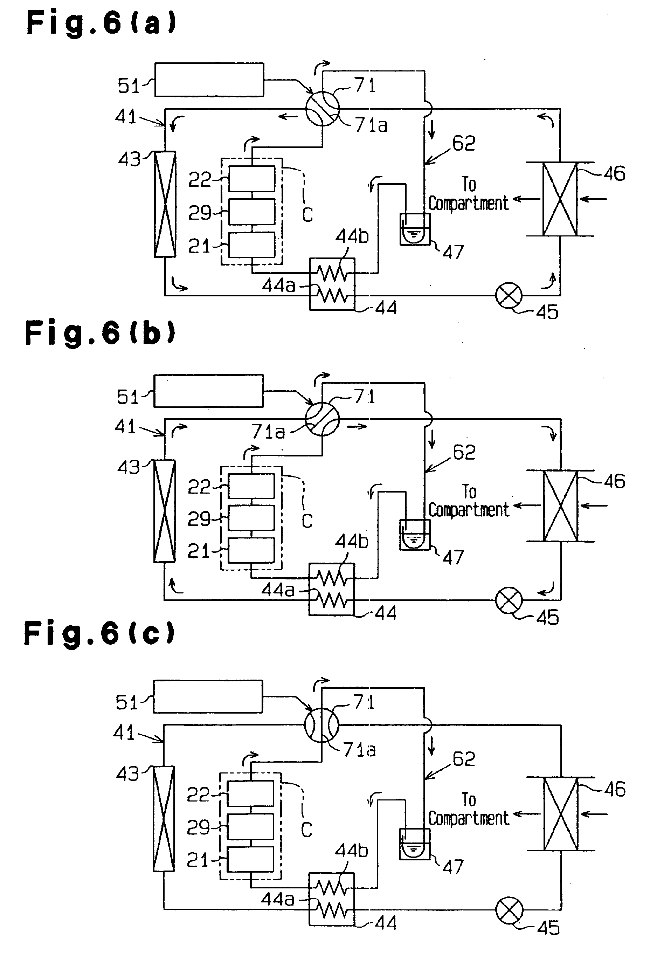

As shown in Figs. 6(a), 6(b) and 6(c), a vehicular air conditioner of the present embodiment causes, to permit heating of the vehicle compartment, the indoor heat exchanger 46 to function as a condenser in the above-mentioned first external refrigerant circuit 41 and at the same time causes the outdoor heat exchanger 43 to function as an evaporator. That is, as shown in Fig. 6(a), in the first external refrigerant circuit 41, the discharge chamber 22 of the compressor C, the outdoor heat exchanger 43, the indoor heat exchanger 46 and the accumulator 47 are connected to a cooling/heating switching valve 71, respectively. The cooling/heating switching valve 71 consists of an electromagnetic valve and is switched to three positions shown in Figs. 6(a), 6(b) and 6(c) by the electric power supply control from the controller 51. The cooling/heating switching valve 71 and the controller 51 constitute a cooling/heating switching means.

The cooling/heating switching valve 71 can change the valve position to the cooling position shown in Fig. 6(a), the heating position shown in Fig. 6(b) and non-air-conditioning position shown in Fig. 6(c). When the cooling/heating switching valve 71 is set at the cooling position shown in Fig. 6(a), the first external refrigerant circuit 41 is set to the cooling mode and the discharge chamber 22 of the compressor C is connected to the outdoor heat exchanger 43, and at the same time the indoor heat exchanger 46 is connected to the accumulator 47.

When the cooling/heating switching valve 71 is set at the heating position shown in Fig. 6(b), the first external refrigerant circuit 41 is set to the heating mode and the discharge chamber 22 of the compressor C is connected to the indoor heat exchanger 46, and at the same time the outdoor heat exchanger 43 is connected to the accumulator 47.

When the cooling/heating switching valve 71 is set at the non-air-conditioning position shown in Fig. 6(c), the first external refrigerant circuit 41 is set to the non-air-conditioning mode and while the discharge chamber 22 of the compressor C is connected to the accumulator 47, the connection of the outdoor heat exchanger 43 to the indoor heat exchanger 46 is shut off.

As shown in Fig. 6(a), when the cooling/heating switching valve 71 is switched to the cooling position, the refrigerant from the discharge chamber 22 of the compressor C is sequentially passed through the cooling/heating switching valve 71, the outdoor heat exchanger 43, the high-pressure side heat exchanger 44a of the internal heat exchanging device 44, the expansion valve 45, the indoor heat exchanger 46, the cooling/heating switching valve 71, the accumulator 47 and the low-pressure side heat exchanger 44b of the internal heat exchanging device 44 to return to the suction chamber 21 of the compressor C (the cooling mode of the first external refrigerant circuit 41). Thus, the outdoor heat exchanger 43 serves as a condenser and the indoor heat exchanger 46 serves as an evaporator as in the first embodiment so that cooling of the vehicle compartment is executed by the endothermic action of the indoor heat exchanger 46.

As shown in Fig. 6(b), when the cooling/heating switching valve 71 is switched to the heating position, the refrigerant from the discharge chamber 22 of the compressor C is sequentially passed through the cooling/heating switching valve 71, the indoor heat exchanger 46, the expansion valve 45, the high-pressure side heat exchanger 44a of the internal heat exchanging device 44, the outdoor heat exchanger 43, the cooling/heating switching valve 71, the accumulator 47 and the low-pressure side heat exchanger 44b of the internal heat exchanging device 44 to return to the suction chamber 21 of the compressor C (the heating mode of the first external refrigerant circuit 41). Thus, the indoor heat exchanger 46 serves as a condenser and the outdoor heat exchanger 43 serves as an evaporator so that heating of the vehicle compartment is executed by the heat radiation of the indoor heat exchanger 46.

It should be noted that in the heating mode, the refrigerant whose pressure is reduced by the expansion valve 45, flows into the high-pressure side heat exchanger 44a of the heat exchanging device 44. The refrigerant that flows in the high-pressure side heat exchanger 44a and the refrigerant that flows in the low-pressure side heat exchanger 44b are substantially the same in terms of the temperature and the pressure, and heat exchange between the two refrigerants does not actually occur.

As shown in Fig. 6(c), when the cooling/heating switching valve 71 is switched to the non-air-conditioning position, the refrigerant circulation via the first external refrigerant circuit 41 (which is used in the cooling mode or heatingmode) is stopped, and at the same time the refrigerant from the discharge chamber 22 of the compressor C is returned to the suction chamber 21 of the compressor C through the cooling/heating switching valve 71, the accumulator 47 and the low-pressure side heat exchanger 44b of the internal heat exchanging device 44. In this state, since the refrigerant does not pass through the indoor heat exchanger 46, the refrigerant circulation does not influence the air conditioning of the vehicle compartment.

That is, the refrigerant passage that passes through the cooling/heating switching valve 71, the accumulator 47 and the low-pressure side heat exchanger 44b of the internal heat exchanging device 44 constitutes the second external refrigerant circuit 62, which uses a part of the refrigerant passage of the first external refrigerant circuit 41 in common. Therefore, the cooling/heating switching valve 71 has a bypass passage 71a that bypasses the indoor heat exchanger 46 in the first external refrigerant circuit 41, and the cooling/heating switching valve 71 and the controller 51 constitute control means of the external refrigerant circuit. It should be noted that the controller 51 switches the cooling/heating switching valve 71 to the non-air-conditioning position on condition that the discharge displacement of the compressor C is minimized.

The present embodiment has the same effects as the effects (2) to (5) of the above-described first embodiment and additionally has the following effects.
(1) In the state of the minimum discharge displacement of the compressor C, the external refrigerant circulation via the second external refrigerant circuit 62 is executed at all times, and the circulating refrigerant and lubricating oil are cooled by the heat radiation of the pipe constituting the second external refrigerant circuit 62 and the internal heat exchanging device 44 (low-pressure side heat exchanger 44b). Thus, the compressor C does not fall into thermally severe conditions. Further, since the second external refrigerant circuit 62 does not pass through the indoor heat exchanger 46, even if the refrigerant flows in the circuit 62, it does not affect the air-conditioning. Therefore, the components of the compressor C can be prevented from falling into thermally severe conditions without executing unnecessary air-conditioning. As a result, the durability of the compressor C can be improved. Further, the use of carbon dioxide that exhibits significantly higher pressure than chlorofluorocarbon refrigerant, as a refrigerant can be easily realized.
(2) By adding a port to the cooling/heating switching valve 71 for switching the cooling/heating, the first external refrigerant circuit 41 and the second external refrigerant circuit 62 are allowed to be open or closed (switched). Thus, an exclusive switching valve for switching each external refrigerant circuit 41 and 62 is not needed and the circuit structure can be simplified.

Further, the following embodiments may be performed in a scope, which does not depart from the object of the present invention.

In the first or third embodiment, the bypass control valve 63 may be formed by a differential pressure valve that opens or closes the bypass passage 61 in accordance with the difference between the discharge pressure and the suction pressure. In this case, the bypass control valve 63 shuts off the bypass passage 61 under the circumstances where the pressure difference is a predetermined value or less, and when the pressure difference exceeds the predetermined value, the bypass passage 61 is opened.

In the second embodiment, the bypass control valve 65 maybe changed to open or close the bypass passage 61 according to the housing temperature of the compressor C. For example, a sensing member (bimetal) 65a of the bypass control valve 65 is disposed to contact the housing of the compressor C outside the bypass passage 61, and the deformation of the sensing member 65a due to fluctuation of the housing temperature is mechanically transmitted to the valve body portion 65b provided in the bypass passage 61.

Further, in the second embodiment, the bypass control valve 65 may be changed to open or close the bypass passage 61 according to the outside air temperature (a physical quantity that influences on the heat-generation state of the compressor C). For example, a sensing member (bimetal) 65a of the bypass control valve 65 may be disposed to be exposed to the outside air, and the deformation of the sensing member 65a due to fluctuation of the outside air temperature may be mechanically transmitted to the valve body portion 65b provided in the bypass passage 61.

In the fifth embodiment in Figs. 6(a), 6(b) and 6(c), the bypass control valves 63 and 65 as in, for example, the first and second embodiments may be disposed on the bypass passage 71a in the cooling/heating switching valve 71. By this setting, the same effects as the effect (6) in the above-described first embodiment can be obtained.

In each embodiment described above, the first external refrigerant circuit 41 and the second external refrigerant circuit 62 may be respectively formed by an independent circuit and the refrigerant passages (equipment such as a pipe and a heat exchanger) need not be shared. In this case, when an exclusive heat exchanger is provided on the second external refrigerant circuit 62, the cooling effects of circulating refrigerant and lubricating oil in the circuit 62 are enhanced.

The present invention may be embodied in a vehicular air conditioner using a fixed displacement type compressor. In this case, for example, the first external refrigerant circuit is shut off and the second external refrigerant circuit is opened when cooling is unnecessary.

Therefore, the present examples and embodiments are to be considered as illustrative and not restrictive and the invention is not to be limited to the details given herein, but may be modified within the scope and equivalence of the appended claims.

A first external refrigerant circuit (41) includes a condenser (43), a pressure reducing device (45) and an evaporator (46). A compressor (C) is directly connected to a drive source (E) of the vehicle to permit power transmission and compresses a refrigerant by being driven by the drive source at all times. The compressor (C) and the first external refrigerant circuit (41) form a refrigerant circulation circuit. A second external refrigerant circuit (62) connects a discharge chamber (22) and a suction chamber (21) of the compressor at the outside of the compressor (C) and permits the circulation of a refrigerant that is not involved in air conditioning. Control devices (42, 51, 63, 67, 71) selectively open or close the first external refrigerant circuit (41) and the second external refrigerant circuit (62), respectively.

## Claims

1. A vehicular air conditioner comprising:
a first external refrigerant circuit (41) including a condenser (43), a pressure reducing device (45) and an evaporator (46), and
a compressor (C) directly connected to a drive source (E) of the vehicle to permit power transmission, wherein the compressor compresses refrigerant by being at all times driven by the drive source, the compressor (C) and the first external refrigerant circuit (41) forming a refrigerant circulation circuit, **characterized in that** said vehicular air conditioner further comprises:
a second external refrigerant circuit (62), which connects a discharge chamber (22) to a suction chamber (21) of said compressor at the outside of said compressor (C) and permits the circulation of the refrigerant that is not involved in air conditioning, and
control means (42, 51, 63, 67, 71), which selectively open or close said first external refrigerant circuit (41) and said second external refrigerant circuit (62), respectively.

2. The vehicular air conditioner according to claim 1, **characterized in that** said second external refrigerant circuit (62) partially shares its circuit with said first external refrigerant circuit (41), and said second external refrigerant circuit (62) includes a bypass passage (61), which connects the discharge chamber (22) to the suction chamber (21) of said compressor (C) in a state where the condenser or the evaporator in said first external refrigerant circuit (41) is bypassed.

3. The vehicular air conditioner according to claim 2, **characterized in that** said first external refrigerant circuit (41) includes an accumulator (47) between the evaporator (46) and the suction chamber (21) of said compressor (C) and a low-pressure side of said bypass passage (61) is connected to said first external refrigerant circuit (41) between the evaporator (46) and the accumulator (47).

4. The vehicular air conditioner according to claim 2 or 3, **characterized in that** said first external refrigerant circuit (41) includes an internal heat exchanging device (44), said internal heat exchanging device (44) having a high-pressure side heat exchanger (44a) through which the refrigerant flows from the discharge chamber (22) of the compressor to the pressure reducing device (45) and a low-pressure side heat exchanger (44b) through which the refrigerant flows from the evaporator (46) to the suction chamber (21) of the compressor, heat exchange being executed between the high-pressure side and low-pressure side heat exchangers (44a, 44b), and that the low-pressure side of said bypass passage (61) is connected between the evaporator (46) and the low-pressure side heat exchanger (44b) of the internal heat exchanging device (44) in said first external refrigerant circuit (41).

5. The vehicular air conditioner according to any one of claims 2 to 4, **characterized in that** the high-pressure side of said bypass passage (61) is connected between the condenser (43) and the pressure reducing device (45) in said first external refrigerant circuit (41).

6. The vehicular air conditioner according to any one of claims 2 to 4, **characterized in that** said first external refrigerant circuit (41) includes an oil separator (67) for separating oil from the refrigerant between the discharge chamber (22) of the compressor and the condenser (43), and said oil separator (67) is connected to the suction chamber (21) of the compressor through an oil return passage (68) for returning a separated oil into the compressor, said oil return passage also serving as the bypass passage.

7. The vehicular air conditioner according to any one of claims 1 to 6, **characterized in that** said first external refrigerant circuit (41) includes an external heat exchanger (43), which functions as said condenser during the cooling and functions as said evaporator during the heating, and an internal heat exchanger (46), which functions as said evaporator during the cooling and functions as said condenser during the heating, and
said first external refrigerant circuit (41) further includes a switching valve (71) switchable to two positions for switching said first external refrigerant circuit to the cooling mode and the heating mode, and when the first external refrigerant circuit (41) is switched to the cooling mode by the switching valve (71), a passage from the discharge chamber (22) of the compressor to the suction chamber (21) of the compressor through the external heat exchanger (43) that functions as the condenser and the internal heat exchanger (46) that functions as the evaporator is formed in the first external refrigerant circuit (41), and that
when the first external refrigerant circuit (41) is switched to the heating mode by said switching valve (71), a passage from the discharge chamber (22) of the compressor to the suction chamber (21) of the compressor through the internal heat exchanger (46) that functions as the condenser and the external heat exchanger (43) that functions as the evaporator is formed in the first external refrigerant circuit (41).

8. The vehicular air conditioner according to claim 7, **characterized in that** said switching valve (71) can be disposed at a position where said first external refrigerant circuit (41) is shut off and said second external refrigerant circuit (61) is opened, and also serves as said control means.

9. The vehicular air conditioner according to any one of claims 1 to 8, **characterized in that** the discharge displacement of said compressor can be changed.

10. The vehicular air conditioner according to claim 9, **characterized in that** said compressor includes a cam plate (12) and a crank chamber (5) that accommodates the cam plate (12), a discharge displacement is adjusted by changing the inclination angle of the cam plate (12) by adjusting the pressure in the crank chamber (5), and when said first external refrigerant circuit (41) is shuts off by said control means, an internal refrigerant circulation circuit is formed within said compressor, which circulation circuit starts from the discharge chamber (22) and returns to the discharge chamber (22) through the crank chamber (5) and the suction chamber (21).

11. The vehicular air conditioner according to claim 10, **characterized in that** when the discharge displacement of the compressor becomes a minimum, said first external refrigerant circuit (41) is shut off in association therewith.

12. The vehicular air conditioner according to claim 10 or 11, **characterized in that** while the refrigerant is circulating in said internal refrigerant circulation circuit, when a physical quantity that indicates a heat-generation state of the compressor or a physical quantity that influences heat-generation state of the compressor shows deterioration of the heat-generation state of the compressor, said second external refrigerant circuit is opened.

13. The vehicular air conditioner according to claim 12, **characterized in that** said control means includes:
an electromagnetic control valve that selectively opens or closes said second external refrigerant circuit by an electric power supply control from the outside,
a sensor, which detects the physical quantity that exhibits a heat-generation state of the compressor or the physical quantity that influences the heat-generation state of the compressor, and
a controller that commands said electric control valve to open the second external refrigerant circuit when the detected information from said sensor shows deterioration of the heat-generation state of the compressor while said refrigerant circulates in said internal refrigerant circulation circuit.

14. The vehicular air conditioner according to claim 12, **characterized in that** said control means includes a sensing member, which senses the physical quantity that indicates the heat-generation state of the compressor or the physical quantity that influences the heat-generation state of the compressor, and operates, said control means opens said second external refrigerant circuit by the operation of said sensing member when a heat-generation state of the compressor deteriorates while a refrigerant circulates in the internal refrigerant circuit.

15. The vehicular air conditioner according to any one of claims 1 to 14, **characterized in that** carbon dioxide is used as said refrigerant.

16. The vehicular air conditioner according to any one of claims 1 to 15, **characterized in that** said second external refrigerant circuit includes a refrigerant-cooling heat exchanger (44b).

17. The vehicular air conditioner according to claim 16, **characterized in that** said refrigerant-cooling heat exchanger is a low-pressure side heat exchanger of an internal heat exchanging device used in said first external refrigerant circuit.
